# EUROPEAN PATENT APPLICATION

(11) **EP 4 422 025 A2**
(43) Date of publication of application: **28.08.2024**
(21) Application number: 24158730.2
(22) Date of filing: 20.02.2024
(51) Int. Cl.: H02J 7/00, H01R 13/68, H01R 31/06

(54) **CONNECTOR FOR BATTERY CONNECTION TO CHARGER**

(30) Priority: 22.02.2023 US 202363486300 P; 19.02.2024 US 202418581074
(71) Applicant: Brunswick Corporation, Mettawa, Illinois 60045 (US)
(72) Inventor: Stafford, Brandon J., Manchester, NH 03104 (US); Shaffer, Benjamin C., Bedford, NH 03110 (US); D'Amelio, Brian R., Auburn, NH 03032 (US); Karanasios, Evripidis, 2151SJ Nieuw-Vennep (NL)
(74) Representative: Sandersons

(57) **Abstract**

A charger (16) for a battery (12) comprises a charger housing (25), a charging circuit (24) within the charger housing (25), and a charger cable (38, 238, 438, 638, 838, 1238, 1338) mechanically connected to the charger housing (25) and electrically connected to the charging circuit (24). A connector (14, 214, 414, 614, 814, 1214, 1314) is provided on a free end of the charger cable (38, 238, 438, 638, 838, 1238, 1338). The connector (14, 214, 414, 614, 814, 1214, 1314) comprises a body (236, 436, 636, 836, 1236, 1336), an electrical terminal (240, 440, 640, 840, 1240, 1340) supported by the body (236, 436, 636, 836, 1236, 1336), and a fuse (252, 452, 652, 852, 1252, 1352) electrically connected between the charging circuit (24) and the electrical terminal (240, 440, 640, 840, 1240, 1340). The fuse (252, 452, 652, 852, 1252, 1352) is located at least partially within the body (236, 436, 636, 836, 1236, 1336) of the connector (14, 214, 414, 614, 814, 1214, 1314).

## Description

### FIELD

The present disclosure relates to battery chargers, such as marine battery chargers configured to charge a marine battery.

### BACKGROUND

U.S. Patent No. 11,757,295 discloses a marine battery charger cable extender including a terminal end that has a positive extender ring terminal and a negative extender ring terminal, and a connection end configured to connect to a terminal end of a pre-wired battery charger. The connection end includes a positive ring end, a positive ring connector configured to hold the positive ring end and galvanic connection with a positive ring terminal of the pre-wired battery charger, and a positive connection cover configured to completely encapsulate the connected positive ring end of the cable extender and the positive ring terminal of the pre-wired battery charger. The connection end also includes a negative ring end, a negative ring connector configured to hold the negative ring end in galvanic connection with a negative ring terminal of the pre-wired battery charger, and a negative connection cover configured to completely encapsulate the connected negative ring end of the cable extender and the negative ring terminal of the pre-wired battery charger.

U.S. Patent No. 11,611,226 discloses a marine battery charger system configured to be installed on a marine vessel to charge a marine battery including a housing, a charging circuit in the housing configured to receive AC power and to output a charge current to the marine battery, and a cord. The cord has a plug end configured to engage an AC power outlet and is configured to transmit the AC power from the AC power outlet to the charging circuit. A controller is configured to control a charging operation mode of the charging circuit and a status indicator is located at the plug end of the cord and configured to be controlled by the controller to indicate the charging operation mode of the charging circuit.

### SUMMARY

This Summary is provided to introduce a selection of concepts that are further described below in the Detailed Description. This Summary is not intended to identify key or essential features of the claimed subject matter, nor is it intended to be used as an aid in limiting the scope of the claimed subject matter.

In accordance with some embodiments of the disclosed subject matter, a connector configured to electrically connect a battery to a charger comprises a body and first and second electrical terminals supported by the body. A first electrical conductor is electrically connected to the first electrical terminal, and a second electrical conductor is electrically connected to the second electrical terminal. A fuse is electrically connected in series with the first electrical conductor, between the first electrical terminal and the first electrical conductor or between two segments of the first electrical conductor. The fuse is located at least partially within the body.

In some embodiments, the fuse is fully located within the body. According to some aspects, the body is molded over the fuse and over ends of the first and second electrical conductors.

In some embodiments, a first portion of the fuse is located within the body and a second portion of the fuse is located external to the body. According to some aspects, the second portion of the fuse is located within a housing. According to some aspects, the housing includes a first housing portion, at least part of the first housing portion being configured for insertion into a cavity in the body. According to some aspects, the housing includes a second housing portion that is configured to connect the first housing portion to the body. According to some aspects, the body is molded over at least one of an end of the first electrical conductor and an end of the second electrical conductor.

In some embodiments, a charger cable comprises the above-noted connector and a cable jacket extending from the body and surrounding the first and second electrical conductors.

In some embodiments, a system comprises a battery, a charger, and the above-noted charger cable electrically connecting the battery to the charger. According to some aspects, the battery has a battery port, and the first and second electrical terminals are configured to be electrically connected to the battery port.

In accordance with some embodiments of the disclosed subject matter, a charger for a battery comprises a charger housing, a charging circuit within the charger housing, and a charger cable mechanically connected to the charger housing and electrically connected to the charging circuit. A connector is provided on a free end of the charger cable. The connector comprises a body, an electrical terminal supported by the body, and a fuse electrically connected between the charging circuit and the electrical terminal. The fuse is located at least partially within the body of the connector.

In some embodiments, the fuse is fully located within the body of the connector. According to some aspects, the connector further comprises an electrical conductor having an end, the fuse is located between the end of the electrical conductor and the electrical terminal, and the body is molded over the fuse and over the end of the electrical conductor. According to some aspects, the electrical terminal is a first electrical terminal, the electrical conductor is a first electrical conductor, and the connector further comprises a second electrical terminal and a second electrical conductor having an end connected to the second electrical terminal. According to some aspects, the body may be molded over the end of the second electrical conductor.

In some embodiments, first portion of the fuse is located within the body and a second portion of the fuse is located external to the body. According to some aspects, the second portion of the fuse is located within a housing. According to some aspects, the housing includes a first housing portion, at least part of the first housing portion being configured for insertion into a cavity in the body. According to some aspects, the housing includes a second housing portion that is configured to connect the first housing portion to the body.

In some embodiments, a system comprises a battery having a battery port, and the above-noted charger. The connector on the free end of the charger cable is configured to be connected to the battery port.

In accordance with some embodiments of the disclosed subject matter, a connector configured to electrically connect a battery to a charger comprises a body and first and second electrical terminals supported by the body. A first electrical conductor has a first end connected to the first electrical terminal. A second electrical conductor has a first end connected to the second electrical terminal. A fuse is electrically connected in series with the first electrical conductor, between the first electrical terminal and the first electrical conductor or between two segments of the first electrical conductor. The fuse is located at least partially within the body.

In some embodiments, the fuse is fully located within the body. According to some aspects, the body is molded over the fuse and the first ends of the first and second electrical conductors.

In some embodiments, a portion of the fuse is located within the body and a portion of the fuse is located within a housing external to the body. According to some aspects, the body is molded over the first ends of the first and second electrical conductors.

In some embodiments, the first and second electrical terminals are electrical pins or electrical sockets.

In some embodiments, a cable jacket extends from the body and surrounds the first and second electrical conductors. A third electrical terminal is at an opposite second end of the first electrical conductor and a fourth electrical terminal is at an opposite second end of the second electrical conductor. In some examples, a system comprises a battery, a charger, and the connector described above electrically connecting the battery to the charger. In some examples, the battery has a battery port, the first and second electrical terminals are configured to be electrically coupled to the battery port, and the third and fourth electrical terminals are configured to be electrically coupled to the charger.

### BRIEF DESCRIPTION OF THE DRAWINGS

The present disclosure is described with reference to the following Figures. The same numbers are used throughout the Figures to reference like features and like components.
FIG. 1 is a schematic of a battery charger system.
FIG. 2 shows a first example of a connector configured to electrically connect a battery to a charger.
FIG. 3 shows a cross-section of the connector of FIG. 2, taken along the line 3-3.
FIG. 4 shows a second example of a connector configured to electrically connect a battery to a charger.
FIG. 5 shows a cross-section of the connector of FIG. 4, taken along the line 5-5.
FIG. 6 shows a third example of a connector configured to electrically connect a battery to a charger.
FIG. 7 shows a cross-section of the connector of FIG. 6, taken along the line 7-7.
FIG. 8 shows a fourth example of a connector configured to electrically connect a battery to a charger.
FIG. 9 shows a cross-section of the connector of FIG. 8, taken along the line 9-9.
FIG. 10 shows a cross-sectional view of the connector of FIG. 8 in a state in which a housing of the connector is not connected to a body thereof.
FIG. 11 shows a cross-sectional view of the connector of FIG. 8 in a state in which the housing of the connector is connected to the body thereof.
FIG. 12 shows a cross section of a variation of the connector of FIG. 2.
FIG. 13 shows a cross section of a variation of the connector of FIG. 6.
FIG. 14 shows a cable jacketing arrangement for the connector of FIG. 8.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items.

Unless otherwise specified or limited, the phrases "at least one of A, B, and C," "one or more of A, B, and C," and the like, are meant to indicate A, or B, or C, or any combination of A, B, and/or C, including combinations with multiple instances of A, B, and/or C. Likewise, unless otherwise specified or limited, the terms "mounted," "connected," "linked," "supported," and "coupled" and variations thereof are used broadly and encompass both direct and indirect mountings, connections, supports, and couplings. Further, unless otherwise specified or limited, "connected" and "coupled" are not restricted to physical or mechanical connections or couplings but may also include electrical connections and couplings.

As used herein, unless otherwise limited or defined, discussion of particular directions is provided by example only, with regard to particular embodiments or relevant illustrations. For example, discussion of "top," "bottom," "front," "back," "left," "right," "lateral" or "longitudinal" features is generally intended as a description only of the orientation of such features relative to a reference frame of a particular example or illustration. Correspondingly, for example, a "top" feature may sometimes be disposed below a "bottom" feature (and so on), in some arrangements or embodiments. Additionally, use of the words "first," "second", "third," etc. is not intended to connote priority or importance, but merely to distinguish one of several similar elements from another.

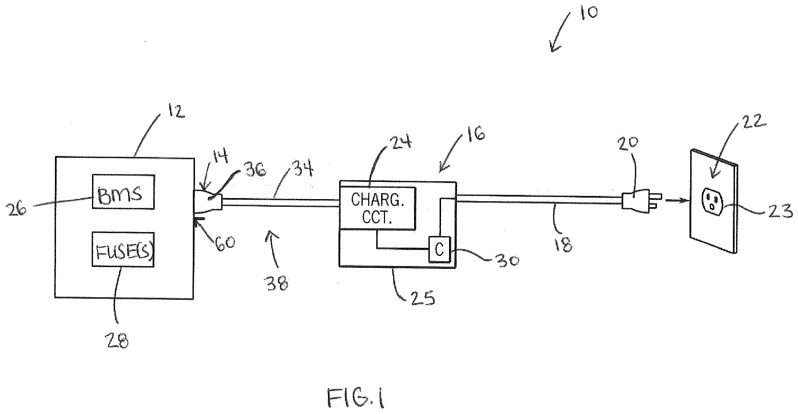

FIG. 1 depicts an exemplary battery charger system 10 configured to charge a battery 12 (e.g., a marine battery). The system includes the battery 12, a charger cable 38 between the battery 12 and a charger 16, and a cord 18 between the charger 16 and an AC power outlet 22. The noted cord 18 has a plug end 20 configured to engage the AC power outlet 22, and specifically the socket 23 of the AC power outlet 22. The charger 16 comprises a charging circuit 24 encased in a housing 25 and configured to receive AC power from the AC power outlet 22 and to output a charge current, which is generally DC, to the battery 12. The housing 25 is an enclosure, such as made of plastic or metal, configured to protect and isolate the charging circuit 24. The housing 25 may be located on a marine vessel or on land, depending on the desire of the owner/operator. The battery charger system 10 includes a controller 30 configured to control a charging operation mode and/or a fault mode of the charging circuit 24.

In one non-limiting example, the battery 12 may be a nominal 36-volt or 48-volt battery, or any battery with a maximum operating voltage at or below 60 volts DC. By way of non-limiting example, the battery 12 has a maximum operating voltage when fully charged that does not exceed 60 volts, such as 58 volts. In other non-limiting examples, the battery 12 may have a maximum operating voltage at or below 12, 24, 36, or 48 volts DC, but as known to those having ordinary skill in the art, the maximum operating voltage will depend on the chemistry of the battery. The battery may be a Lithium-ion battery comprised of multiple battery cells. In other embodiments, the battery 12 may be a lead-acid battery, fuel cell, flow battery, ultracapacitor, and/or other device capable of storing and outputting electric energy. The battery 12 may include an associated battery controller 26, which may be a control system comprising multiple controllers that coordinate to control the overall function of the battery 12. The battery controller 26 (e.g., BMS and/or other controllers inside the battery housing) is configured to monitor and/or control the battery 12, including being configured to monitor parameters measured within the battery housing-such as current, voltage, temperature, pressure, etc.-and determine battery charge level (e.g., battery state of charge and/or battery voltage), battery temperature, battery state of health, etc. The battery controller 26 may further be configured to determine a power limit for the battery 12, which is an amount of power that the battery 12 can supply without overheating, over-discharging, or otherwise compromising the battery 12. The battery 12 also includes an internal fuse or fuse(s) 28, which may be Class T fuses and/or pyro fuses.

The charger cable 38 between the battery 12 and the charger 16 is the focus of the remainder of the disclosure. The charger cable 38 includes a cable jacket 34 and a connector 14 (e.g., plug or receptacle) configured to be connected to the battery 12 via a mating battery port 60. The focus will be on the body 36 of the connector 14 that is configured to be electrically connected with the battery 12. In the present example, the charger cable 38 is permanently connected to the charger 16 and no plug/receptacle is provided between the two. In other examples, a plug/receptacle could be provided at the end of the charger cable 38 that connects to the charger 16, in which case the charger 16 would be provided with a mating charger port.

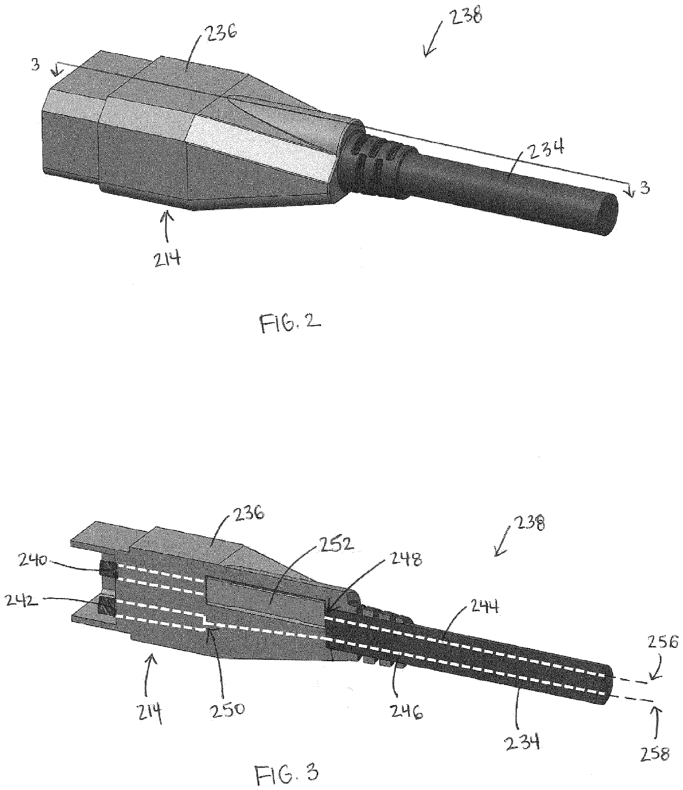

As noted, the connector 14 is configured to electrically connect the battery 12 to the charger 16. As shown in FIGS. 2 and 3, one example of the connector 214 comprises a body 236. First and second electrical terminals 240, 242 are supported by the body 236. The connector 214 includes a first electrical conductor 244 (e.g., positive wire) having a first end 248 connected to the first electrical terminal 240. The connection between the first end 248 of the first electrical conductor 244 and the first electrical terminal 240 is indirect and made by way of a fuse 252, as will be described further below. The connector 214 includes a second electrical conductor 246 (e.g., negative wire) having a first end 250 connected to the second electrical terminal 242. The connector 14 may also include terminals for other purposes, such as but not limited to terminals for connection to signal wires (e.g., CAN high, CAN low, CAN ground), a drain wire, and an interlock wire. A fuse 252 is electrically connected in series with the first electrical conductor 244, such as between the first electrical terminal 240 and the first electrical conductor 244 or between two segments of the first electrical conductor 244. The former example is shown here, although it could be that the fuse 252 is soldered between two segments of the first electrical conductor 244, depending on the length of the first electrical terminal 240 and the length of the body 236. According to the present disclosure, the fuse 252 is located at least partially within the body 236. Specifically, in the example of FIGS. 2 and 3, the fuse 252 is fully located within the body 236. The body 236 is molded over the fuse 252 and the first ends 248, 250 of the first and second electrical conductors 244, 246. The first and second electrical conductors 244, 246 extend from the body 236 and through a cable jacket 234, described further herein below.

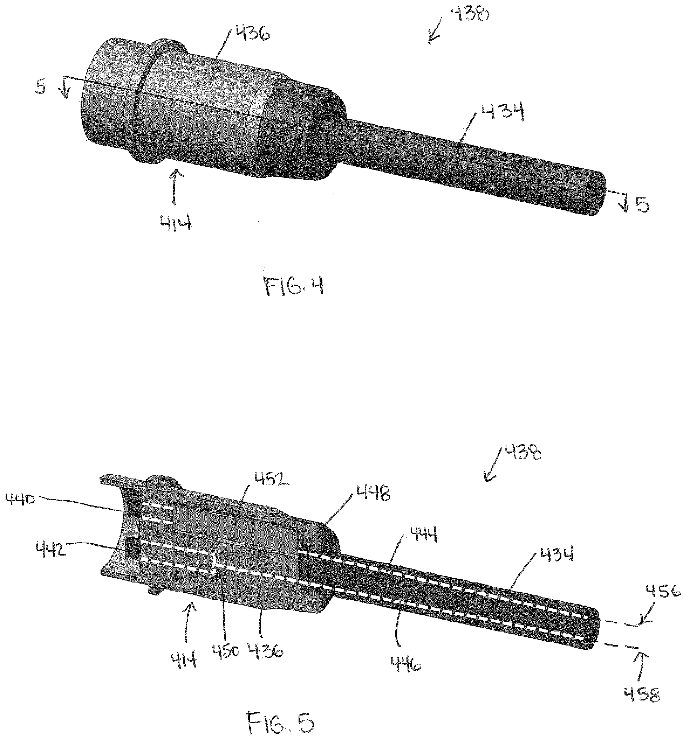

The connector 14 can have alternative shapes. As shown in FIGS. 4 and 5, another example of a connector 414 comprises a body 436, which in this case is cylindrical in shape. First and second electrical terminals 440, 442 are supported by the body 436. The connector 414 includes a first electrical conductor 444 (e.g., positive wire) having a first end 448 connected to the first electrical terminal 440. The connector 414 includes a second electrical conductor 446 (e.g., negative wire) having a first end 450 connected to the second electrical terminal 442. A fuse 452 is electrically connected in series with the first electrical conductor 444, such as between the first electrical terminal 440 and the first electrical conductor 444 or between two segments of the first electrical conductor 444. The former example is shown here, although it could be that the fuse 452 is soldered between two segments of the first electrical conductor 444, depending on the length of the first electrical terminal 440 and the length of the body 436. According to the present disclosure, the fuse 452 is located at least partially within the body 436. Specifically, in the example of FIGS. 4 and 5, the fuse 452 is fully located within the body 436. The body 436 is molded over the fuse 452 and the first ends 448, 450 of the first and second electrical conductors 444, 446. The first and second electrical conductors 444, 446 extend from the body 436 and through a cable jacket 434, described further herein below.

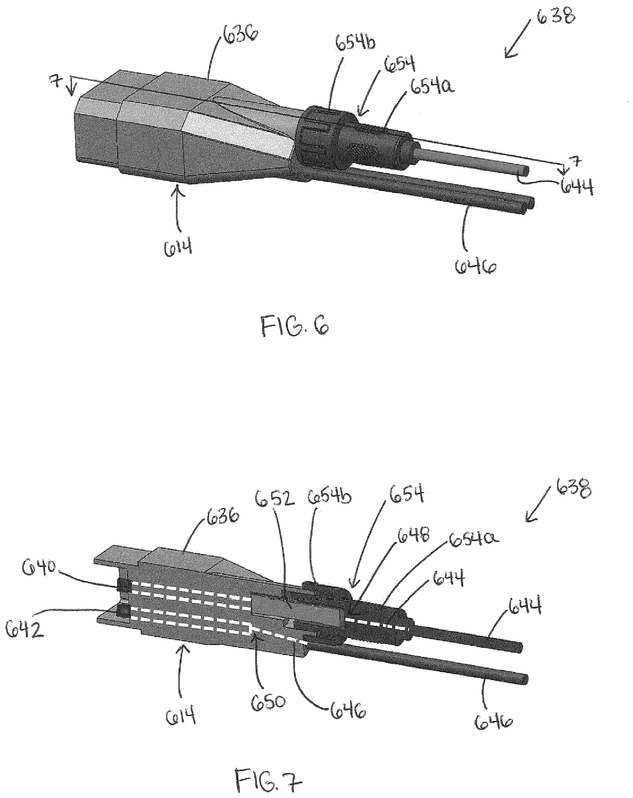

Another example of a connector 614 shown in FIGS. 6 and 7 comprises a body 636. First and second electrical terminals 640, 642 are supported by the body 636. The connector 614 includes a first electrical conductor 644 (e.g., positive wire) having a first end 648 connected to the first electrical terminal 640. The connector 614 includes a second electrical conductor 646 (e.g., negative wire) having a first end 650 connected to the second electrical terminal 642. The connector 14 may also include terminals for other purposes, such as but not limited to terminals for connection to signal wires (e.g., CAN high, CAN low, CAN ground), a drain wire, and an interlock wire. A fuse 652 is electrically connected in series with the first electrical conductor 644, such as between the first electrical terminal 640 and the first electrical conductor 644 or between two segments of the first electrical conductor 644. The former example is shown here, although it could be that the fuse 652 is soldered between two segments of the first electrical conductor 644, depending on the length of the first electrical terminal 640 and the length of the body 636. The fuse 652 is located at least partially within the body 636. More specifically, a portion of the fuse 652 is located within the body 636 and a portion of the fuse 652 is located within a housing 654 external to the body 636. The housing 654 includes a first portion 654a, at least part of which is configured to be inserted into the body 636, and a second portion 654b that is configured to slide or thread over the first portion 654a and over a fuse-receiving portion of the body 636. The body 636 is molded over at least one of the first ends 648, 650 of the first and second electrical conductors 644, 646 (here, over first end 650 of second electrical conductor 646).

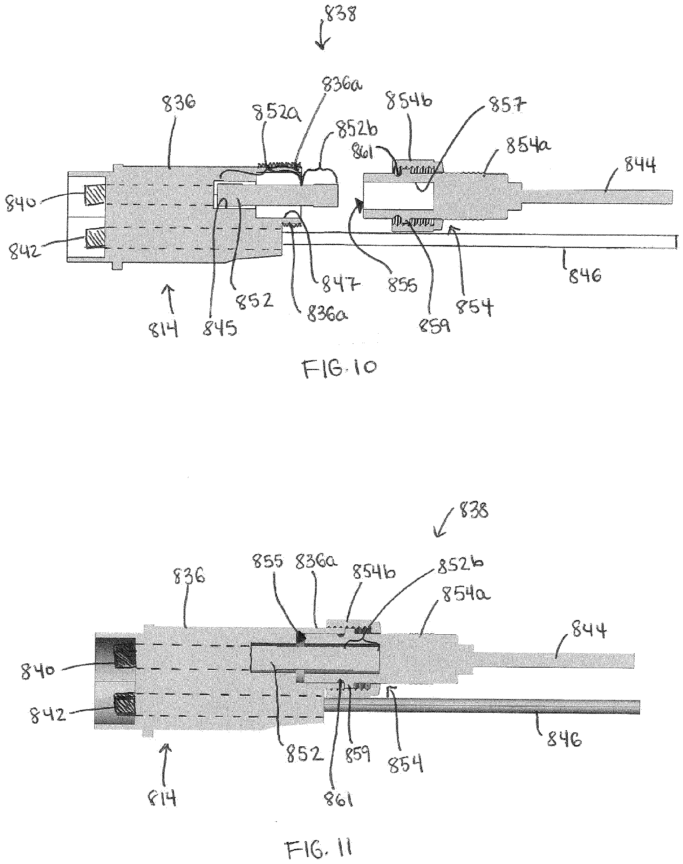

FIGS. 10 and 11 show in more detail how the fuse 652 and housing 654 are connected to the body 636.

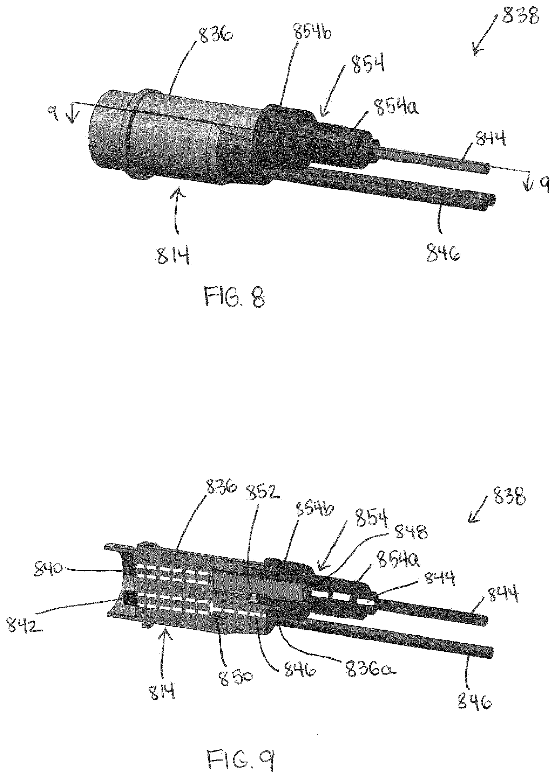

Another example of a connector 814 shown in FIGS. 8 and 9 comprises a body 836. First and second electrical terminals 840, 842 are supported by the body 836. The connector 814 includes a first electrical conductor 844 (e.g., positive wire) having a first end 848 connected to the first electrical terminal 840. The connector 814 includes a second electrical conductor 846 (e.g., negative wire) having a first end 850 connected to the second electrical terminal 842. A fuse 852 is electrically connected in series with the first electrical conductor 844, such as between the first electrical terminal 840 and the first electrical conductor 844 or between two segments of the first electrical conductor 844. The former example is shown here, although it could be that the fuse 852 is soldered between two segments of the first electrical conductor 844, depending on the length of the first electrical terminal 840 and the length of the body 836. The fuse 852 is located at least partially within the body 836. More specifically, a portion of the fuse 852 is located within the body 836 and a portion of the fuse 852 is located within a housing 854 external to the body 836. The housing 854 includes a first portion 854a at least part of which is configured to be inserted into the body 836 and a second portion 854b that is configured to slide or thread over the first portion 854a and over a fuse-receiving portion of the body 836. The body 836 is molded over at least one of the first ends 848, 850 of the first and second electrical conductors 844, 846 (here, over first end 850 of second electrical conductor 846).

Further aspects of the connector 814 of FIGS. 8 and 9 will now be described with reference to FIGS. 10 and 11. Referring to FIG. 10, a first portion 852a of the fuse 852 is located within the body 836 of the connector 814 and a second portion 852b of the fuse 852 is located external to the body 836. As shown in FIG. 11, the second portion 852b of the fuse 852 is located within the housing 854. The housing 854 includes the noted first housing portion 854a, and at least part of the first housing portion 854a (proximate end 855) is configured for insertion into a cavity 847 (FIG. 10) in the body 836. The housing 854 also includes the noted second housing portion 854b, which is configured to connect the first housing portion 854a to the body 836.

More specifically, referring to FIG. 10, the fuse 852 is inserted into a smaller-diameter cavity 845 in the body 836 that provides for electrical connection between the fuse 852 and the first electrical terminal 840. The fuse 852 extends through the larger-diameter cavity 847 and is sized such that the first portion 852a of the fuse 852 is located within the body 836, while the second portion 852b extends from the body 836. After the fuse 852 is inserted into the body 836, the housing 854, which is attached to the end of the first electrical conductor 844, is then brought near the fuse 852 and the fuse-receiving portion 836a of the body 836 and aligned therewith. At this point in time, the second housing portion 854b is located further from the end 855 of the housing 854 (i.e., further to the right in the orientation shown here) than when the housing 854 is fully installed on the body 836. This allows for insertion of the first housing portion 854a into the cavity 847 in the body 836 without interference from the second housing portion 854b. As the housing 854 is brought over the fuse 852, the fuse 852 is received into a cavity 857 in the first portion 854a of the housing 854 that provides for electrical connection between the fuse 852 and the first electrical conductor 844.

Once the end 855 of the housing 854 abuts the inner end of the cavity 847 and/or once a flange 859 on the outer circumference of the first housing portion 854a abuts the outer end of the fuse-receiving portion 836a of the body 836, the first portion 854a of the housing 854 is prevented from further insertion into the cavity 847. The cavity 845, cavity 847, and cavity 857 have a total combined length that accommodates the length of the fuse 852 and allows for electrical connection between the first electrical conductor 844, the fuse 852, and the first electrical terminal 840 when the housing 854 is fully installed on the fuse-receiving portion 836a of the body 836. As shown in FIG. 11, the second portion 854b of the housing 854 is then moved (to the left in the orientation shown here) over the fuse-receiving portion 836a of the body 836 and secured to the body 836 so as to connect the housing 854 to the body 836. This can be done, for example, by threading together internal threads on the second portion 854b of the housing 854 and external threads on the fuse-receiving portion 836a of the body 836 as shown here. In other examples, the second portion 854b of the housing 854 could be secured to the body 836 by a friction fit, by biased prongs or spring clips, by a latch, or by other known connection mechanisms. Preferably, the connection between the housing 854 and the body 836 is made watertight, such as by provision of an O-ring (not shown) located in an annular depression 861 adjacent the flange 859 on the first portion 854a of the housing 854.

Although the connection of the housing 854 to the body 836 is described in detail with respect to the connector 814 of FIGS. 8-11, those having ordinary skill in the art would understand that the same detailed description applies to the connector 614 of FIGS. 6 and 7.

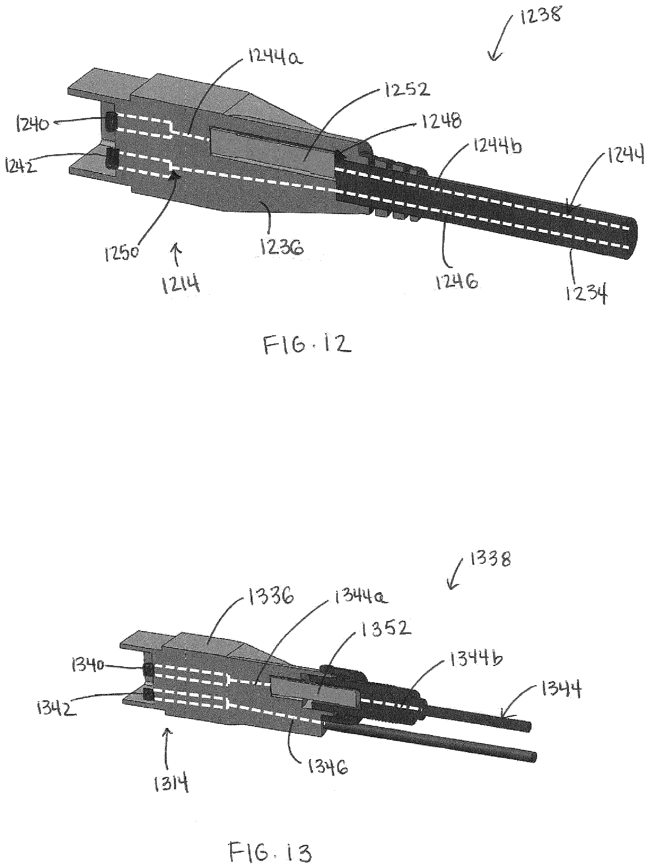

As noted, the present disclosure also contemplates examples in which the fuse is connected between two segments of the first electrical conductor. For example, FIG. 12 shows a connector 1214 in which the fuse 1252 is provided between segment 1244a and segment 1244b of the first electrical conductor 1244. FIG. 13 shows an example in which the fuse 1352 is provided between segment 1344a and segment 1344b of the first electrical conductor 1344. Other parts not referred to specifically with respect to FIGS. 12 and 13 are like those described hereinabove with like numerals in the ones and tens places of the reference number.

In the examples shown, the first and second electrical terminals 240, 242, 440, 442, 640, 642, 840, 842 are electrical pins; however, the first and second electrical terminals could be electrical sockets. Further, only the positive and negative terminals/conductors are shown. In other examples, the connectors may include ground terminals/wires and signal terminals/wires.

In the examples of FIGS. 2-5, a cable jacket 234, 434 extends from the body 236, 436 and surrounds the first and second electrical conductors 244, 246, 444, 446. A third electrical terminal 256, 456 is located at an opposite second end of the first electrical conductor 244, 444. A fourth electrical terminal 258, 458 is located at an opposite second end of the second electrical conductor 246, 446. The third and fourth electrical terminals 256, 456, 258, 458 are configured to be electrically coupled to the charger 16. More specifically, referring briefly back to FIG. 1, the battery 12 has a battery port 60. The first and second electrical terminals 240, 242, 440, 442 are configured to be electrically coupled to the battery port 60, and the third and fourth electrical terminals 256, 258, 456, 458 are configured to be electrically coupled to the charger 16, such as for example by way of a permanent electrical connection.

In the examples of FIGS. 6-9, the cable is not shown, although it would surround the electrical conductors 644, 646, 844, 846 shown. In one example, an electrical splitter or combiner is provided to transition the individually jacketed electrical conductors into a larger cable. The accessible location of the fuse 652, 852 requires that the jacket around the first electrical conductor 644, 844 be combined with the jacket around the second electrical conductor 646, 846 somewhere along the length of the connector between the body 636, 836 and the remainder of the cable jacket 34. However, a tradeoff is that the fuse 652, 852 in these examples is removable, by pulling the second portion 654b, 854b of the housing 654, 854 off of the fuse-receiving portion of the body 636, 836 and thereafter removing the first portion 654a, 854a of the housing 654, 854 from the body 636, 836. A blown fuse 652, 852 can then be replaced with a new fuse.

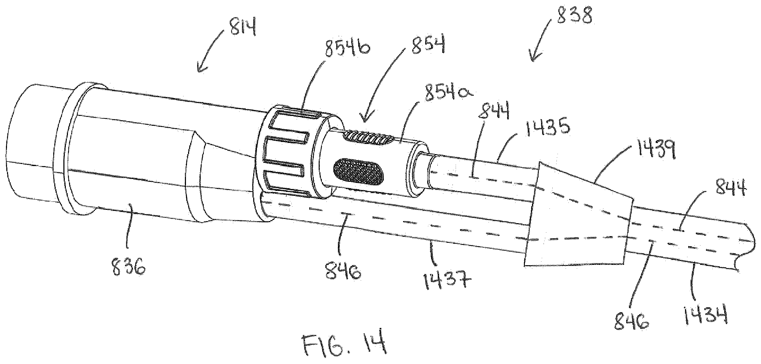

For example, referring to FIG. 14, the connector 814 of FIGS. 8-11 is shown as it would be implemented with cable jacketing. The first electrical conductor 844 is insulated by jacket 1435 and the second electrical conductor 846 is insulated by jacket 1437. An electrical splitter 1439 is provided for connection of the two cable jackets 1435, 1437 into one cable jacket 1434, through which both the first and second electrical conductors 844, 846 extend toward the charger. A similar arrangement could be provided for the charger cable 638 and connector 614 of FIGS. 6 and 7.

In each of the above examples, the fuse 252, 452, 652, 852 is in series with the positive electrical conductor 244, 444, 644, 844. The fuse could instead or also be provided in series with the ground electrical conductor, but if the fuse blows, then communications between the battery 12 and the charger 16 will be lost. Fusing the positive electrical conductor only is sufficient when the connector 14 connects one charger to one battery. In examples in which multiple chargers charge one battery, fuses may be provided on both the positive and ground conductors. In each of the above examples, the fuse 252, 452, 652, 852 may be soldered to the conductors with which it is situated in series.

The fuse 252, 452, 652, 852 could be a glass or ceramic fuse. An exemplary minimum voltage rating for the fuse, based on the maximum voltage of the battery 12 that is to be charged, is (by way of example only) 60V. Alternatively, the exemplary voltage rating could be 250V. The fuse is DC-rated. In one non-limiting example, the fuse has an amp interrupt rating of 500 amps. In other non-limiting examples, the fuse has an amp interrupt rating of 750 amps, 1000 amps, or greater. If fuse(s) 28 were not provided internal to the battery 12, the fuse in the connector 14 would be required to be a Class T fuse with, by way of non-limiting example, an amp interrupt rating of 9000 amps. However, the fuse(s) 28 in the battery 12 limit the current from the battery 12 such that a smaller fuse can be provided external to the battery 12. This allows the fuse 252, 452, 652, 852 to be small enough to be able to fit within the body 236, 436, 636, 836 of the connector 214, 414, 614, 814.

As noted hereinabove, the focus of the above description is on the body 236, 436, 636, 836 of the connector 214, 414, 614, 814 that connects to the battery port 60. A fuse is desirable in this location to protect the conductors between the battery 12 and the charger 16, as well as the battery 12 and charger 16 themselves, from damage. The fuse 252, 452, 652, 852 is purposefully provided external to the battery 12 because a fault that will cause the fuse 252, 452, 652, 852 to blow is likely to be in the charger 16 or in the wiring in the charger cable 38 between the charger 16 and battery 12. Containing the fuse 252, 452, 652, 852 in a part that is less expensive than the battery 12 (such as part of the charger 16) prevents the need to service the more expensive battery 12, which might otherwise cause damage to the battery. At the same time, it is desirable to limit the length of wire between the battery 12 and the fuse to protect the charger cable 38 in the event that the fault causing the fuse 252, 452, 652, 852 to blow is in the battery 12. This is because the current from the charger 16 is regulated, and the battery 12 is capable of much more current than the charger 16.

In accordance with some embodiments of the disclosed subject matter, a connector 214, 414, 614, 814, 1214, 1314 configured to electrically connect a battery 12 to a charger 16 comprises a body 236, 436, 636, 836, 1236, 1336 and first and second electrical terminals 240, 242, 440, 442, 640, 642, 840, 842, 1240, 1242, 1340, 1342 supported by the body 236, 436, 636, 836, 1236, 1336. A first electrical conductor 244, 444, 644, 844, 1244, 1344 is electrically connected to the first electrical terminal, and a second electrical conductor 246, 446, 646, 846, 1246, 1346 is electrically connected to the second electrical terminal. A fuse 252, 452, 652, 852, 1252, 1352 is electrically connected in series with the first electrical conductor 244, 444, 644, 844, 1244, 1344, between the first electrical terminal and the first electrical conductor 244, 444, 644, 844, 1244, 1344 or between two segments 1244a, 1244b, 1344a, 1344b of the first electrical conductor. The fuse 252, 452, 652, 852, 1252, 1352 is located at least partially within the body 236, 436, 636, 836, 1236, 1336.

In some embodiments, the fuse 252, 452, 1252 is fully located within the body 236, 436, 1236. According to some aspects, the body 236, 436, 1236 is molded over the fuse 252, 452, 1252 and over ends 248, 250, 448, 450, 1248, 1250 of the first and second electrical conductors.

In some embodiments, a first portion 852a of the fuse 852 is located within the body 836 and a second portion 852b of the fuse 852 is located external to the body 836. According to some aspects, the second portion 852b of the fuse 852 is located within a housing 854. According to some aspects, the housing 854 includes a first housing portion 854a, at least part of the first housing portion 854a being configured for insertion into a cavity 847 in the body 836. According to some aspects, the housing 854 includes a second housing portion 854b that is configured to connect the first housing portion 854a to the body 836. According to some aspects, the body 836 is molded over at least one of an end 848 of the first electrical conductor 844 and an end 850 of the second electrical conductor 846.

In some embodiments, a charger cable 238, 438, 638, 838, 1238, 1338 comprises the above-noted connector 214, 414, 614, 814, 1214, 1314 and a cable jacket 234, 434, 1434 extending from the body and surrounding the first and second electrical conductors 244, 246, 444, 446, 644, 646, 844, 846, 1244, 1246, 1344, 1346.

In some embodiments, a system 10 comprises a battery 12, a charger 16, and the above-noted charger cable 238, 438, 638, 838, 1238, 1338 electrically connecting the battery 12 to the charger 16. According to some aspects, the battery 12 has a battery port 60, and the first and second electrical terminals 240, 242, 440, 442, 640, 642, 840, 842, 1240, 1242, 1340, 1342 are configured to be electrically connected to the battery port 60.

In accordance with some embodiments of the disclosed subject matter, a charger 16 for a battery 12 comprises a charger housing 25, a charging circuit 24 within the charger housing 25, and a charger cable 38, 238, 438, 638, 838, 1238, 1338 mechanically connected to the charger housing 25 and electrically connected to the charging circuit 24. A connector 14, 214, 414, 614, 814, 1214, 1314 is provided on a free end of the charger cable 38, 238, 438, 638, 838, 1238, 1338. The connector 14, 214, 414, 614, 814, 1214, 1314 comprises a body 236, 436, 636, 836, 1236, 1336, an electrical terminal 240, 440, 640, 840, 1240, 1340 supported by the body, and a fuse 252, 452, 652, 852, 1252, 1352 electrically connected between the charging circuit 24 and the electrical terminal 240, 440, 640, 840, 1240, 1340. The fuse 252, 452, 652, 852, 1252, 1352 is located at least partially within the body 236, 436, 636, 836, 1236, 1336 of the connector.

In some embodiments, the fuse 252, 452, 1252 is fully located within the body 236, 436, 1236 of the connector 214, 414, 1214. According to some aspects, the connector 214, 414, 1214 further comprises an electrical conductor 244, 444, 1244 having an end 248, 448, 1248, the fuse 252, 452, 1252 is located between the end 248, 448, 1248 of the electrical conductor 244, 444, 1244 and the electrical terminal 240, 440, 1240, and the body 236, 436, 1236 is molded over the fuse 252, 452, 1252 and over the end 248, 448, 1248 of the electrical conductor 244, 444, 1244. According to some aspects, the electrical terminal 240, 440, 1240 is a first electrical terminal, the electrical conductor is a first electrical conductor 244, 444, 1244, and the connector further comprises a second electrical terminal 242, 442, 1242 and a second electrical conductor 246, 446, 1246 having an end 250, 450, 1250 connected to the second electrical terminal 242, 442, 1242. According to some aspects, the body 236, 436, 1236 may be molded over the end 250, 450, 1250 of the second electrical conductor 246, 446, 1246.

In some embodiments, first portion 852a of the fuse 852 is located within the body 836 and a second portion 852b of the fuse 852 is located external to the body 836. According to some aspects, the second portion 852b of the fuse 852 is located within a housing 854. According to some aspects, the housing 854 includes a first housing portion 854a, at least part of the first housing portion 854a being configured for insertion into a cavity 847 in the body 836. According to some aspects, the housing 854 includes a second housing portion 854b that is configured to connect the first housing portion 854a to the body 836.

In some embodiments, a system 10 comprises a battery 12 having a battery port 60, and the above-noted charger 16. The connector 14, 214, 414, 614, 814, 1214, 1314 on the free end of the charger cable 38, 238, 438, 638, 838, 1238, 1338 is configured to be connected to the battery port 60.

By locating the fuse at least partially within the body of the connector on the charger cable, the charger/system can be made more aesthetically pleasing and less susceptible to water ingress, in comparison to a system with a fuse provided in a separate dedicated housing as disclosed, for example, in U.S. Patent No. 11,757,295.

In the above description, certain terms have been used for brevity, clarity, and understanding. No unnecessary limitations are to be inferred therefrom beyond the requirement of the prior art because such terms are used for descriptive purposes and are intended to be broadly construed. The order of method steps or decisions shown in the Figures and described herein are not limiting on the appended claims unless logic would dictate otherwise. It should be understood that the decisions and steps can be undertaken in any logical order and/or simultaneously. The different systems and methods described herein may be used alone or in combination with other systems and methods. It is to be expected that various equivalents, alternatives and modifications are possible within the scope of the appended claims.

The functional block diagrams, operational sequences, and flow diagrams provided in the Figures are representative of exemplary architectures, environments, and methodologies for performing novel aspects of the disclosure. While, for purposes of simplicity of explanation, the methodologies included herein may be in the form of a functional diagram, operational sequence, or flow diagram, and may be described as a series of acts, it is to be understood and appreciated that the methodologies are not limited by the order of acts, as some acts may, in accordance therewith, occur in a different order and/or concurrently with other acts from that shown and described herein. For example, those skilled in the art will understand and appreciate that a methodology can alternatively be represented as a series of interrelated states or events, such as in a state diagram. Moreover, not all acts illustrated in a methodology may be required for a novel implementation.

## Claims

1. A charger (16) for a battery (12), the charger (16) comprising:
a charger housing (25);
a charging circuit (24) within the charger housing (25);
a charger cable (38, 238, 438, 638, 838, 1238, 1338) mechanically connected to the charger housing (25) and electrically connected to the charging circuit (24); and
a connector (14, 214, 414, 614, 814, 1214, 1314) on a free end of the charger cable (38, 238, 438, 638, 838, 1238, 1338), the connector (14, 214, 414, 614, 814, 1214, 1314) comprising:
a body (236, 436, 636, 836, 1236, 1336);
an electrical terminal (240, 440, 640, 840, 1240, 1340) supported by the body (240, 440, 640, 840, 1240, 1340); and
a fuse (252, 452, 652, 852, 1252, 1352) electrically connected between the charging circuit (24) and the electrical terminal (240, 440, 640, 840, 1240, 1340);
wherein the fuse (252, 452, 652, 852, 1252, 1352) is located at least partially within the body (236, 436, 636, 836, 1236, 1336) of the connector (14, 214, 414, 614, 814, 1214, 1314).

2. The charger of claim 1, wherein the fuse (252, 452, 1252) is fully located within the body (236, 436, 1236) of the connector (214, 414, 1214).

3. The charger of claim 1 or claim 2, wherein the connector (214, 414, 1214) further comprises an electrical conductor (244, 444, 1244) having an end (248, 448, 1248);
wherein the fuse (252, 452, 1252) is located between the end (248, 448, 1248) of the electrical conductor (244, 444, 1244) and the electrical terminal (240, 440, 1240); and
wherein the body (236, 436, 1236) is molded over the fuse (252, 452, 1252) and over the end (248, 448, 1248) of the electrical conductor (244, 444, 1244).

4. The charger of claim 3, wherein the electrical terminal is a first electrical terminal (240, 440, 1240), the electrical conductor is a first electrical conductor (244, 444, 1244), and the connector (214, 414, 1214) further comprises:
a second electrical terminal (242, 442, 1242); and
a second electrical conductor (246, 446, 1246) having an end (250, 450, 1250) connected to the second electrical terminal (242, 442, 1242);
wherein the body (236, 436, 1236) is molded over the end (250, 450, 1250) of the second electrical conductor (246, 446, 1246).

5. The charger of claim 1, wherein a first portion (852a) of the fuse (652, 852, 1352) is located within the body (636, 836, 1336) and a second portion (852b) of the fuse (652, 852, 1352) is located external to the body (636, 836, 1336).

6. The charger of claim 5, wherein the second portion (852b) of the fuse (652, 852, 1352) is located within a housing (654, 854).

7. The charger of claim 6, wherein the housing (654, 854) includes a first housing portion (654a, 854a), at least part of the first housing portion (654a, 854a) being configured for insertion into a cavity (847) in the body (636, 836, 1336).

8. The charger of claim 7, wherein the housing (654, 854) includes a second housing portion (654b, 854b) that is configured to connect the first housing portion (654a, 854a) to the body (636, 836, 1336).

9. The charger of any one of claims 1-8, wherein the electrical terminal is a first electrical terminal (240, 440, 640, 840) and the connector (214, 414, 614, 814) further comprises:
a second electrical terminal (242, 442, 642, 842) supported by the body (236, 436, 636, 836);
a first electrical conductor (244, 444, 644, 844) electrically connected to the first electrical terminal (240, 440, 640, 840); and
a second electrical conductor (246, 446, 646, 846) electrically connected to the second electrical terminal (242, 442, 642, 842);
wherein the fuse (252, 452, 652, 852) is electrically connected between the first electrical terminal (240, 440, 640, 840) and the first electrical conductor (244, 444, 644, 844).

10. The charger of any one of claims 1-8, wherein the electrical terminal is a first electrical terminal (1240, 1340) and the connector (1214, 1314) further comprises:
a second electrical terminal (1242, 1342) supported by the body (1236, 1336);
a first electrical conductor (1244, 1344) electrically connected to the first electrical terminal (1240, 1340); and
a second electrical conductor (1246, 1346) electrically connected to the second electrical terminal (1242, 1342);
wherein the fuse (1252, 1352) is electrically connected between two segments (1244a, 1244b, 1344a, 1344b) of the first electrical conductor (1244, 1344).

11. The charger of claim 9 or claim 10, wherein the body (236, 436, 1236) is molded over the fuse (252, 452, 1252) and over ends (248, 250, 448, 450, 1248, 1250) of the first and second electrical conductors (244, 246, 444, 446, 1244, 1246).

12. The charger of claim 9 or claim 10, wherein the body (636, 836, 1336) is molded over at least one of an end (648, 848, 1348) of the first electrical conductor (644, 844, 1344) and an end (650, 850, 1350) of the second electrical conductor (646, 846, 1346).

13. A system comprising:
a battery (12) having a battery port (60); and
the charger (16) of any one of claims 1-12;
wherein the connector (14, 214, 414, 614, 814, 1214, 1314) on the free end of the charger cable (38, 238, 438, 638, 838, 1238, 1338) is configured to be connected to the battery port (60).

14. The system of claim 13, wherein the battery (12) is a marine battery.
